# EUROPÄISCHE PATENTANMELDUNG

(11) **EP 0 832 762 A2**
(43) Veröffentlichungstag der Anmeldung: **01.04.1998**
(21) Anmeldenummer: 97116230.0
(22) Anmeldetag: 18.09.1997
(51) Int. Cl.: B60C 9/08, B29D 30/20

(54) **Karkasse radialer Bauart, Fahrzeugluftreifen mit derartiger Karkasse und Verfahren zur Herstellung eines Fahrzeugluftreifens**

(30) Priorität: 25.09.1996 DE 19639366
(71) Anmelder: Continental Aktiengesellschaft, 30165 Hannover (DE)
(72) Erfinder: Poqué, Dionysius, 52076 Aachen (DE); Poqué, Hartwig, 30167 Hannover (DE)

(57) **Zusammenfassung**

Karkasse radialer Bauart eines Fahrzeugluftreifens mit Gürtel, die mit parallelen, in Gummi eingebetteten Festigkeitsträgern ausgebildet ist,
- wobei die Karkasse doppellagig oder dreilagig ausgebildet ist,
- wobei die Lagen der Karkasse mit im wesentlichen gleicher axialer Breite ausgebildet sind,
- wobei jeder parallele Festigkeitsträger der Karkassenlagen ein Garn ist,
- insbesondere mit einer 2/0 oder 3/0-Kernumwicklungsanordnung.

## Beschreibung

Die Erfindung betrifft eine Karkasse radialer Bauart eines Fahrzeugluftreifens mit Gürtel, die mit parallelen, in Gummi eingebetteten Festigkeitsträgern ausgebildet ist, sowie einen Fahrzeugluftreifen mit einer Karkasse radialer Bauart mit parallelen in Gummi eingebetteten Festigkeitsträgern und mit im Bereich der Lauffläche radial oberhalb der Karkasse angeordnetem Gürtel, sowie ein Verfahren zur Herstellung eines Fahrzeugluftreifens mit derartiger Karkasse.

Es ist allgemein bekannt (Lexikon der Kautschuktechnik von Jochen Schnefger, 2. überarbeitete und erweiterte Auflage, Hüthig Buchverlag GmbH, Heidelberg, 1991, Seite 232), daß Garne fadenförmige textile Erzeugnisse sind, die aus einer Anzahl von Spinnfasern (Spinnfasergarne) oder einer bzw. mehreren Endlosfasern bestehen (Endloskerne). Durch Zusammendrehen einfacher Garne entstehen Zwirne. Die Zwirne können in einem oder in mehreren Zwirnvorgängen hergestellt werden (einstufige oder mehrstufige Zwirne). Einstufige Zwirne können je nach Anzahl der verwendeten einfachen Garne zwei- oder mehrfach sein. Einstufige Zwirne, die in der Reifentechnik eingesetzt werden, nennt man auch Corde.

In diesem Sinne sind die bekannten bei Fahrzeugluftreifen von Kraftfahrzeugen eingesetzten Festigkeitsträger von Karkassen radialer Bauart Reifencorde.

Die Karkasse muß einerseits dem Fahrzeugluftreifen hinreichend Festigkeit geben, andererseits soll sie noch genügend Dämpfung für die gewünschten Komfort-Eigenschaften gewährleisten. Karkassen werden üblicherweise ein- oder mehrlagig mit Festigkeitsträgern aus Reifencorden ausgebildet. Die Festigkeit wird bei den stark beanspruchten Kraftfahrzeugreifen radialer Bauart durch die gegenüber einem Garn deutlich höhere Festigkeit der Corde erzielt.

Von Fahrradreifen ist es bekannt, die Diagonalkarkasse mit Festigkeitsträgern aus Garn auszubilden. Da die Fahrradreifen im Vergleich zu KFZ-Reifen nur geringen Belastungen ausgesetzt sind, reicht die Festigkeit der Garne dort aus. Bei den im Vergleich zu KFZ-Reifen nur geringen axialen Breiten der Karkassenlagen von Fahrradreifen sind die labilen Karkassenlagen, die bei Einsatz von Garnen erzeugt werden, dort zuverlässig verarbeitbar.

Da die Anforderungen an die Leistungsfähigkeit moderner Fahrzeugluftreifen einerseits immer höher gesetzt werden, dies andererseits allerdings gleichzeitig mit Gewichtsreduzierung einhergehen soll, wird zunehmend die Zahl der Karkassenlagen reduziert und die Festigkeit durch entsprechende Verbesserungen der Corde weiter gewährleistet. Aus diesem Grunde werden heute bereits sehr viele PKW-Reifen radialer Bauart auch für Hochgeschwindigkeitseinsätze mit lediglich einer Karkassenlage mit besonders hochwertigen zugfesten Corden ausgebildet.

Eine weitere Reduzierung des Gewichts eines KFZ-Reifens radialer Bauart wäre dadurch denkbar, daß die einlagig ausgebildete Karkasse nicht mit Festigkeitsträgern aus schwerem Cord, sondern mit Festigkeitsträgern aus leichterem Garn ausgebildet würde. Die geringe Festigkeit der Garne gegenüber denen der Corde bewirkt jedoch eine sehr labile Karkassenlage mit vergleichsweise geringer Festigkeit, so daß die Anforderungen an die Festigkeit eines modernen KFZ-Reifens radialer Bauart nicht sicher gewährleistet werden könnten. Aus diesem Grund ist der Einsatz von Garnen in radialen Karkassen von KFZ-Reifen bisher auch nicht ernsthaft in Erwägung gezogen oder auch nur vorgeschlagen worden. Sondern zur Sicherstellung ausreichender Festigkeit werden durchweg Karkassen mit Festigkeitsträgern aus Cord eingesetzt.

Die Karkassenlagen radialer Bauart von KFZ-Reifen weisen üblicherweise auch eine deutlich größere axiale Breite als Fahrradreifen auf. Die Garne mit ihrer relativ geringen Festigkeit gegenüber Corden und die radiale Bauart der Karkasse mit der erforderlichen Ausrichtung der Festigkeitsträger mit großem, stumpfem Winkel zur Umfangsrichtung des Reifens machen eine einzelne zugeschnittene Karkassenlage mit Garnen, die herkömmlich zugeschnitten auf eine Aufbautrommel aufgelegt und dann bombiert werden soll, sehr labil und für diese Verarbeitung für KFZ-Reifen nur schwer und unzuverlässig handhabbar.

Durch die einlagige Ausbildung der Karkasse radialer Bauart mit Festigkeitsträgern aus Cord kann zwar Gewicht gegenüber mehrlagigen Karkassen mit Corden als Festigkeitsträger eingespart werden, allerdings entfällt die in den mehrlagigen Karkassen zwischen den Festigkeitsträgern der einen Karkassenlage und den Festigkeitsträgern der anderen Karkassenlage angeordnete elastische Gummischicht. Federung und Dämpfung der elastischen Gummischicht zwischen den Karkassenlagen begünstigen die Komfort-Eigenschaften des fertigen Reifens. Diese komfortbildende Zwischenschicht zwischen den Karkassenlagen entfällt bei der Ausbildung eines Fahrzeugluftreifens mit nur einer Karkassenlage radialer Bauart. Dieser Wegfall bedingt eine Verschlechterung der Komfort-Eigenschaften oder Mehraufwand, da zur Beibehaltung der Komfort-Eigenschaften des Reifens dieser Verschlechterung durch andere zusätzliche Maßnahmen am Fahrzeugluftreifen wieder entgegengewirkt werden müßte.

Der Erfindung liegt die Aufgabe zugrunde, einen KFZ-Reifen, insbesondere einen PKW-Reifen, mit Karkasse radialer Bauart zu ermöglichen, bei dem die Karkasse trotz geringen Gewichtes gute Komfort-Eigenschaften gewährleistet.

Erfindungsgemäß wird die Aufgabe durch die Ausbildung der Karkasse gemäß den Merkmalen von Anspruch 1, durch die Ausbildung des Fahrzeugluftreifens gemäß den Merkmalen von Anspruch 5 sowie durch das Verfahren zur Herstellung eines Fahrzeugluftreifens gemäß den Merkmalen von Anspruch 6 gelöst.

Die Ausbildung der Karkasse radialer Bauart mehrlagig mit n-Lagen, insbesondere doppellagig, wobei die n-Lagen der Karkasse mit im wesentlichen gleicher axialer Breite ausgebildet sind, und die parallelen Festigkeitsträger der Karkassenlagen jeweils ein Garn sind, ermöglicht gegenüber einer Karkasse mit doppelten Karkassenlagen mit Festigkeitsträgern aus Cord, der aus n-Garnen aufgebaut ist, eine deutliche Gewichtsreduktion und gegenüber einer Karkasse mit einer Karkassenlage aus Cord, der gemäß Definition aus mehreren Garnen gezwirnt ist, je nach Zahl der in den Corden jeweils verwendeten Garne ebenfalls eine Gewichtsreduktion oder bei Identität der insgesamt verwendeten Zahl von Garnen zumindest im wesentlichen die Beibehaltung des Gewichts und dabei durch die Mehrlagigkeit der Karkasse eine gegenüber einer einlagig ausgebildeten Karkasse mit Corden vergleichbare Festigkeit der Karkasse über die gesamte axiale Breite. Die Mehrlagigkeit ermöglicht dabei die Beibehaltung der dämpfenden Gummischicht zwischen den Karkassenlagen, so daß eine derartig ausgebildete Karkasse im Gegensatz zur einlagigen Karkasse mit Corden zusätzlich gute Komfort-Eigenschaften des Fahrzeugluftreifens begünstigt. Insbesondere die zweilagige Karkasse mit Garn ermöglicht minimales Gewicht unter Beibehaltung von Dämpfung

Da gummiertes Garngewebe in Abhängigkeit vom Garndurchmesser sehr dünn gummiert werden kann (Untergrenze ist der Garndurchmesser), läßt sich wirtschaftlich günstig ein Zweilagen-Reifen fertigen, bei dem die beiden Karakassenfäden in etwa die gleiche Länge aufweisen. Die Gummierung kann gegenüber Cordgewebe sehr dünn ausfallen und ermöglicht dennoch Dämpfungseigenschaften zwischen den Karkaßlagen. Die Karkaßfestigkeit ist dabei in etwa gleichwertig mit üblichen Einlagen-Cordgewebereifen. Die mehrlagige, insbesondere zweilagige Garnkarkasse verbessert den Komfort im Vergleich zu einlagigen mit Cordgeweben aufgebauten Kraftfahrzeugreifen im Absorbieren von Fahrbahnunebenheiten und im Reifengeräusch durch die Mehrlagigkeit. Dies wird erreicht, ohne daß zusätzllches Reifengewicht mit dem hieraus resultierenden erhöhten Rollwiderstand erforderlich wird . Positiv ist auch, daß dünnere Innenschichten angewandt werden können, ohne die negativen Folgen der Linerpenetration in der Karkasse zu haben.

Durch die Herstellung der Karkasse bzw. des Fahrzeugluftreifens mit einem vorgefertigten doppellagigen Karkassenband mit Karkassenlagen gleicher Breite erhält das zu verarbeitende Band für die Weiterverarbeitung ausreichend Stabilität. Insbesondere die n/0-, bevorzugt die 2/0-Kernumwicklungsanordnung ermöglicht eine besonders einfache Verarbeitbarkeit der mehrlagigen Karkasse mit Garn zur Herstellung eines Fahrzeugluftreifens beispielsweise durch axiales Aufschieben der Kerne auf den radial äußeren Umfang der mehrlagigen, insbesondere doppellagigen Karkasse und gemeinsames stabiles Umfalten der Karkassenlagenenden.

Die Ausbildung durch spiraliges Wickeln des Karkassenbandes auf die Aufbautrommel unter Umfangsüberlappung mit wenigstens einer Überlappungslänge, die der Umfangslänge entspricht, ist es möglich, durch einfaches Verdrehen der Aufbautrommel das an sich labile einlagige Karkassenlagenband gleichmäßig in Umfangsrichtung ohne große Beanspruchung der Stabilität in einen zweilagigen, stabilen Zustand aufzuziehen. Ohne weitere Beanspruchung des labilen Karkassenlagenbandes, beispielsweise durch Schneiden, Transport, Auflegen, Andrücken der einzelnen Lagen, wird so direkt durch Weiterwickeln eine zweite Karkassenlage erzeugt, die dann zusammen mit der ersten Karkassenlage die weitere gemeinsame Weiterverarbeitung bei der Herstellung des Reifens erleichtert. Gleichzeitig wird durch die spiralige Aufwicklung das Entstehen einer zusätzlichen Umfangsnahtstelle oder einer zusätzlichen Überlappungsstelle, das beim Nacheinanderauflegen der beiden Karkassenlagen entstehen würde, vermieden. Hierdurch wird die Einschnürungsgefahr der Seitenwand reduziert und die Einförmigkeit des Reifens verbessert.

Bevorzugt wird das Garn gemäß den Merkmalen von Anspruch 3 aus Nylon, Polyester, Reyon, Aramit oder Kohlefaser hergestellt. Zur Erzielung optimaler Festigkeits- und Dehnungseigenschaften ist das Garn mit Garndrehungen zwischen 300 und 800 T/m (Drehungen/m).

Unterhalb 300 T/m wird das Material so in der Dehnung reduziert, daß die Gefahr besteht, daß im Reifen Stoßbrüche auftreten können. Der Bereich über 800 T/m ist in der Herstellung sehr aufwendig und die Festigkeit wird stark reduziert.

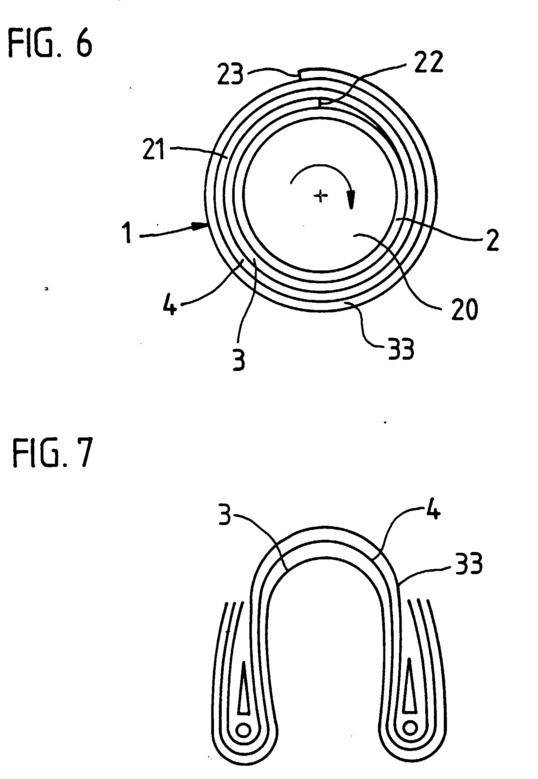

Die Erfindung wird im folgenden anhand der in den Figuren 1 bis 7 dargestellten Ausführungsbeispiele näher erläutert. Hierin zeigen
- Fig. 7: schematische Querschnittsdarstellung durch einen erfindungsgemäßen Fahrzeugluftreifen mit zweilagiger Garnkarkasse,
- Fig. 2: schematische Darstellung des Aufbaus der Karkasse auf einer Aufbautrommel,
- Fig. 3: schematische Darstellung der Herstellung der Karkasse auf einer Aufbautrommel gemäß Schnitt III-III von Figur 2,
- Fig. 4a und 4b: schematische Darstellung zu anderer Herstellung einer Karkasse auf einer Aufbautrommel gemäß Schnitt III-III,
- Fig. 5a bis 5c: weitere Ausführungsbeispiele zur Gestaltung des Wulstbereiches in vereinfachter Querschnittsdarstellung des Fahrzeugluftreifens.
- Fig. 6: schematische Darstellung gemäß Fig. 3, jedoch mit 3-lagigen Karkasse
- Fig. 7: schematische Darstellung gemäß Fig. 5a, jedoch mit 3-lagiger Karkasse

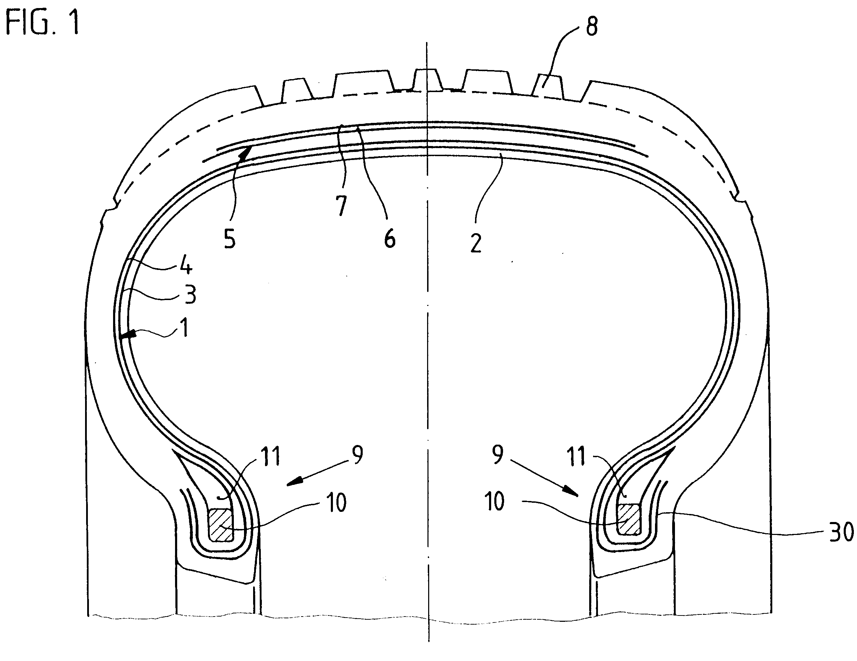

Figur 1 zeigt einen herkömmlichen Fahrzeugluftreifen mit zwei konzentrischen, axial voneinander beabstandeten, ringförmigen Wulstkernen 10, mit einer Innenschicht 2 aus relativ luftundurchlässigem Gummimaterial bekannter Art, die sich axial von Wulstkern zu Wulstkern und in Umfangsrichtung über den gesamten Umfang des Reifens erstreckt. Radial über die Innenschicht 2 ist eine Karkasse 1 aus zwei Karkassenlagen 3 und 4 aufgebaut. Die Karkassenlagen 3 und 4 erstrecken sich über den gesamten Umfang des Reifens und in axialer Richtung von dem einen Wulstkern 10 zu dem anderen Wulstkern 10, wo sie sich in bekannter 2/0-Anordnung von axial innerhalb des Wulstkerns radial unterhalb des Wulstkerns nach axial außen erstrecken und um den Wulstkern 10 herum axial außerhalb der Wulstkerne 10 nach radial obenhin umgeschlagen sind, so daß beide Karkaßlagen 3 und 4 axial außerhalb der Wulstkerne 10 jeweils einen Umschlagsbereich 30 bilden. Der Umschlag 30 verläuft parallel zum Wulstkern 10 und zur radial oberhalb des Wulstkerns 10 ausgebildetem Kernprofil 11.

Zwischen Karkasse 1 und dem profilierten Laufstreifen 8 ist in bekannter Weise ein Gürtel 5 aus erster Gürtellage 6 und zweiter Gürtellage 7 ausgebildet, die sich jeweils über den Umfang des Reifens und in axialer Richtung von Reifenschulter zu Reifenschulter erstrecken.

Die Karkassenlagen 3 und 4 sind jeweils aus parallelen und im Bereich der Äquatorialebene, die in Figur 1 gestrichelt dargestellt ist, im wesentlichen mit 90° zur Umfangsrichtung ausgerichteten in Kautschuk eingebetteten Festigkeitsträgern ausgebildet.

Die Gürtellagen 6 und 7 sind in bekannter Weise aus jeweils parallelen Stahlcorden bekannter Art oder sonstigen für den Gürtel eines Radialreifens geeigneten, bekannten Festigkeitsträgern, beispielsweise aus Aramid ausgebildet, die jeweils in Kautschuk eingebettet sind. Die Stahlcorde der ersten Gürtellage 6 und die der zweiten Gürtellage 7 sind in der Äquatorialebene unter einem Winkel von 15° bis 45° zur Umfangsrichtung ausgerichtet, wobei die Orientierung der Stahlcorde der ersten Gürtellage zu denen der zweiten Gürtellage entgegengerichtet ist, so daß sie einen Kreuzverband bilden. Es ist denkbar, radial oberhalb des Gürtels eine zusätzliche Bandage bekannter Art, beispielsweise aus Nyloncorden, auszubilden, wobei die Bandage in herkömmlicher, nicht dargestellter, Weise entweder in Form von einzelnen Bandagestreifen oder von einem durchgehenden schraubenförmig über den Gürtel gewickelten Bandagestreifen ausgebildet sein kann. Es ist auch denkbar, den Gürtel aus mehr als zwei Gürtellagen, beispielsweise aus 3 Lagen mit Festigkeitsträgern aus Stahl, Aramid oder anderen geeigneten Festigkeitsträgern oder in Mischbauweise aus beispielsweise 2 Lagen Stahl und 1 Lage Aramid aufzubauen.

Die parallelen Festigkeitsträger der Karkassenlagen 3 und 4 sind parallel angeordnete Garne, die abhängig vom Reifeneinsatz z.B. ob als Reserverad, als Hochgeschwindigkeits- und/oder als besonders belastbares Rad sowie der entsprechenden Handlings-Anforderungen aus Nylon, Polyester, Reyon, Aramit oder Kohlefaser mit Garndrehungen im Bereich von etwa 300 - 800 T/m (Drehungen/(m) ausgebildet sind. Die Garne beider Karkassenlagen weisen im wesentlichen gleiche Fadenlängen im Fahrzeugluftreifen auf. Die Garne sind im Kautschuk der einzelnen Karkaßlagen eingebettet. Das Garn der Karkassenlagen 3 und 4 kann beispielsweise ein Nylongarn mit einem Detex von 1400/1, einem Garndurchmesser von 0,43 mm und mit 400 T/m sein. Weitere Beispiele für derartige Garne sind in Tabelle 1 angegeben. Abhängig vom Anwendungsfall kann die Garndrehung in einem Bereich zwischen ± 50 % der in Tabelle 1 angegebenen Werte liegen. Beispielsweise ist es möglich, durch Erhöhung der Garndrehungszahl den Reifenkomfort positiv zu beeinflussen und durch geringere Garndrehungszahlen das Fahrverhalten (Handling) zu verbessern.

Das gummierte Garngewebe der Karkassenlagen 3 und 4 ist sehr dünn gummiert. Die Gummierungsdicke ist minimal die Dicke des Garndurchmessers.

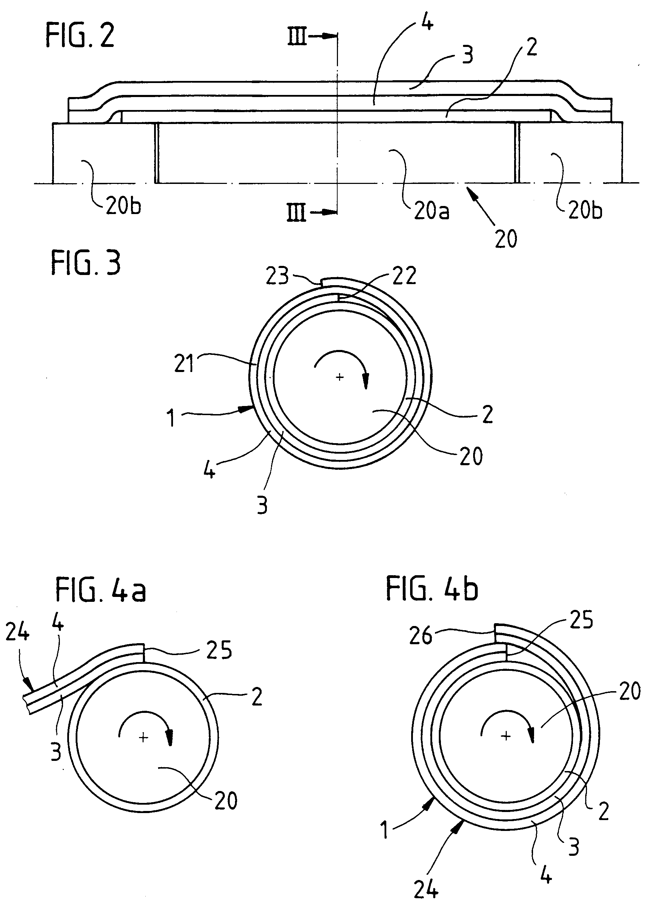

Figur 2 zeigt schematisch eine Aufbautrommel 20 bekannter Art, die beispielsweise aus einer zentralen Trommel 20a und seitlichen konzentrischen Hilfstrommeln 20b bekannter Art ausgebildet sein kann.

Gemäß Figur 2 und 3 wird die zweilagige Garnkarkasse dadurch erzeugt, daß auf die auf der Aufbautrommel 20 in bekannter Weise aufgebaute Innenschicht 2, die sich über die gesamte

**Tabelle 1**

| Material | dtex | Garndurchmesser ca. mm | ca. T/m |
|---|---|---|---|
| | | | |
| Nylon | 1400/1 | 0,43 | 400 |
| | 940/1 | 0,35 | 480 |
| | 700/1 | 0,30 | 530 |
| Polyester | 2200/1 | 0,54 | 300 |
| | 1670/1 | 0,51 | 350 |
| | 1440/1 | 0,45 | 380 |
| | 1100/1 | 0,38 | 420 |
| | 840/1 | 0,34 | 490 |
| | 720/1 | 0,32 | 540 |
| Reyon | 2440/1 | 0,54 | 350 |
| | 1840/1 | 0,49 | 450 |
| | 1220/1 | 0,39 | 550 |
| | 920/1 | 0,35 | 750 |

Umfangslänge der Aufbautrommel erstreckt, ein vorgefertigtes Karkassenband, mit in Kautschuk eingebetteten parallelen Garnen, mit ihrem Karkassenbandanfang aufgelegt wird und durch Verdrehen der Aufbautrommel um deren Achse auf die Innenschicht 2 und somit auf die Aufbautrommel 20 aufgewickelt wird. Die Aufbautrommel 20 wird dabei um mehr als 2 volle Umdrehungen verdreht, so daß das Karkassenband 21 über mindestens 2 volle Umfangslängen aufgewickelt wird und somit die beiden radial übereinander angeordneten axial deckungsgleichen Karkassenlagen 3 und 4 gebildet werden. Das Karkassenband 21 ist somit über die erste Karkassenlage 3 unter Überlappung über zunächst eine volle Umfangslänge zur Bildung der Karkassenlage 4 und darüber hinaus über einen weiteren kleinen Umfangsbereich zur Bildung einer Überlappung des Karkassenlagenende 23 mit dem Karkassenlagenanfang 22 spiralig aufgewickelt. Mit nur einer beim Aufbau auf die Aufbautrommel erzeugten Überlappung von nur einem Lagenanfang und einem -ende in Umfangsrichtung werden somit 2 Karkassenlagen aufgebaut. Die zylindrische kontinuierliche Wicklung beider Karkassenlagen ermöglicht eine gleichmäßige, geringe Belastung des labilen Garnkarkassenmaterials beim Wickeln. Wie in Figur 2 dargestellt ist, sind beide Karkassenlagen 3 und 4 mit gleicher axialer Breite konzentrisch, axial deckungsgleich ausgebildet.

Die weiteren Schritte zur Reifenherstellung sind herkömmliche Verfahrensschritte, die nicht dargestellt sind. Beispielsweise ist es denkbar, in einem nächsten Schritt die Wulstkerne in bekannter Weise in ihre axiale Position radial außen auf den Karkassenlagen zu setzen. In einem weiteren Schritt ist es denkbar, durch Bombage die Reifentorusform herzustellen. Dabei wird der axial innere, zwischen den beiden Wulstkernen befindliche Karkassenbereich radial angehoben und die Wulstkerne werden axial nach innen verschoben. Die beiden Karkassenlagen 3 und 4 in ihrer gleichen axialen Breite und ihrer axial identischen Position bilden ein stabiles, bei der Bombage erhebbares Karkassenlagenpaket. In bekannter Weise werden dann die axialen Karkassenlagenenden beider Lagen jeweils gemeinsam zu den Umschlägen 30, wie in Figur 1 dargestellt ist, umgeschlagen und angedrückt. Danach wird ein in bekannter Weise vorgefertigtes Gürtelpaket mit Laufstreifen radial konzentrisch über das Karkaßpaket verschoben und in herkömmlicher weise mit diesem verbunden. Im Anschluß daran wird der derartig hergestellte Reifenrohling in bekannter Weise in einer Vulkanisiereinrichtung unter Einbezug einer Resterhebung vulkanisiert.

Es ist auch denkbar, wie in Figur 4 dargestellt ist, aus zwei Garnkarkassenlagen gleicher axialer Breite und Länge, die deckungsgleich aufeinander angeordnet sind, bereits ein doppellagiges Karkassenband 24 vorzukonfektionieren. Ein derartig vorkonfektioniertes doppellagiges Karkassenband 24 wird, wie in Figur 4a dargestellt ist, mit seinem Anfang 25 auf die auf der Aufbautrommel 20 aufgebaute Innenschicht 2 wie beim herkömmlichen Aufbau einer Karkassenlage aufgelegt. Durch Verdrehen der Aufbautrommel 20 wird das doppellagige Karkassenband 24 auf die Innenschicht 2 aufgewickelt, so daß das Karkassenbandende 26 den Karkassenbandanfang 25 überlappt. Die Karkassenlagenbänder 24 sind bereits auf gleiche Umfangslänge vorgefertigt. Sie können in herkömmlicher Weise auf die Aufbautrommel aufgelegt werden, da die vorkonfektionierte Doppellagigkeit der an sich labilen Garne hinreichend Stabilität der doppellagigen Karkassenbänder 24 ermöglicht. Die deckungsgleiche Anordnung stellt Stabilität über die gesamte Breite der Karkasse sicher, so daß sie wie eine herkömmliche Karkassenlage mit Cord handhabbar ist.

Die weiteren Verfahrensschritte zur Herstellung des Fahrzeugluftreifens entsprechen den herkömmlichen, wie sie beispielsweise bereits zur Figur 3 beschrieben sind.

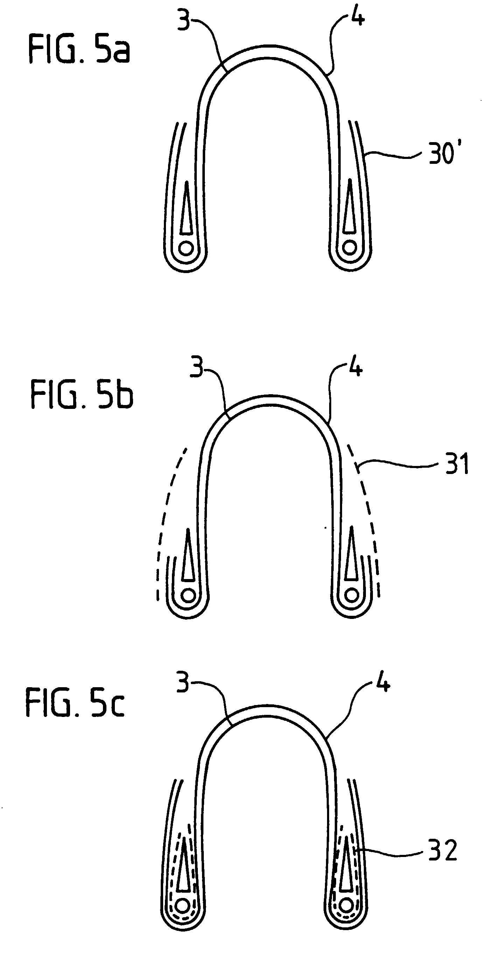

Es ist denkbar, die Umschläge 30, wie in Figur 1 dargestellt ist, noch im Bereich des Kernprofils 11 in ihrer radialen Erstreckung zu beenden, oder, wie in Figur 5a dargestellt ist, die Umschläge 30' radial über das Kernprofil 11 hinaus zu erstrecken und auf die Hauptteile der Karkasse zurückzuführen. Es ist auch denkbar, wie beispielsweise für die Ausführung mit kürzeren Karkassenumschlägen gemäß Figur 1 in der Figur 5b dargestellt ist, im Kernbereich zusätzliche Verstärkungsstreifen 31 bekannter Art anzuordnen, oder, wie in Figur 5c beispielhaft an einer Ausführung mit längeren Umschlägen dargestellt ist, zusätzliche um den Kern herumgeführte Verstärkungsstreifen 32, die auch Flipper genannt sind, anzuordnen.

Fig. 6 und 7 zeigen den Aufbau der Karkasse gemäß Fig. 3 und Fig. 5a, jedoch mit geänderter Karkassenlagenzahl, nämlich mit 3 Karkassenlagen 3, 4, 33.

### Bezugszeichenliste

- 1: Karkasse
- 2: Innenschicht
- 3: erste Karkassenlage
- 4: zweite Karkassenlage
- 5: Gürtel
- 6: erste Gürtellage
- 7: zweite Gürtellage
- 8: Laufstreifen
- 10: Wulstkern
- 11: Kernprofil
- 20: Aufbautrommel
- 21: Karkassenband
- 22: Karkassenbandanfang
- 23: Karkassenbandende
- 24: doppellagiges Karkassenband
- 25: Karkassenbandanfang
- 26: Karkassenbandende
- 30: Umschlag
- 31: Verstärkungsstreifen
- 32: Flipper
- 33: dritte Karkassenlage

## Patentansprüche

1. Karkasse radialer Bauart eines Fahrzeugluftreifens mit Gürtel, die mit parallelen, in Gummi eingebetteten Festigkeitsträgern ausgebildet ist,
- wobei die Karkasse mehrlagig mit n-Lagen, insbesondere mit 2-Lagen ausgebildet ist,
- wobei die Lagen der Karkasse mit im wesentlichen gleicher axialer Breite ausgebildet sind,
- wobei jeder parallele Festigkeitsträger der Karkassenlagen ein Garn ist,
- insbesondere mit einer n/0, insbesondere einer 2/0-Kernumwicklungsanordnung.

2. Karkasse gemäß den Merkmalen von Anspruch 1,
- die ein kontinuierlich in Umfangsrichtung spiralig gewickeltes Karkassenlagenband ist, das sich über den Umfang des Reifens erstreckt und durch die Spiralwicklung überlappt aufgelegt ist, wobei die Überlappungslänge zumindest über die Umfangslänge reicht, so daß aus dem einen kontinuierlichen Karkaßlagenband durch Überlappung die mehreren Karkaßlagen gebildet sind.

3. Karkasse gemäß den Merkmalen von Anspruch 1 oder 2,
- wobei das Garn aus Nylon, Polyester, Reyon, Aramit oder Kohlefaser, insbesondere mit Garndrehungen von etwa 300 bis 800 T/m ausgebildet ist.

4. Karkasse gemäß den Merkmalen von Anspruch 2,
- wobei das Garn im Reifen im Bereich der Äquatorebene im wesentlichen unter einem Winkel von 90° zur Umfangsrichtung ausgerichtet ist.

5. Fahrzeugluftreifen mit Karkasse radialer Bauart mit parallelen, in Gummi eingebetteten Festigkeitsträgern, und im Bereich der Lauffläche radial oberhalb der Karkasse angeordnetem Gürtel, wobei
- die Karkasse mehrlagig mit n-Lagen, insbesondere mit 2-Lagen ausgebildet ist,
- die Lagen der Karkassen mit gleicher axialer Breite ausgebildet sind,
- wobei die Festigkeitsträger der Karkasse jeweils ein Garn sind,
- wobei insbesondere die Kernumwicklung eine n/0-, insbesondere 2/0-Kernumwicklung ist.

6. Verfahren zur Herstellung eines Fahrzeugluftreifens mit Karkasse gemäß den Merkmalen von Anspruch 1,
- wobei ein doppellagig vorkonfektioniertes Karkassenband auf der Reifenaufbautrommel zur Bildung der Karkasse aufgelegt wird.

7. Verfahren zur Herstellung eines Fahrzeugluftreifens mit Karkasse gemaß den Merkmalen von Anspruch 1,
- wobei ein Karkassenlagenband spiralig unter Überlappung in Umfangsrichtung gewickelt wird, so daß die Länge der Überlappung wenigstens über die Umfangslänge reicht.
